# EUROPEAN PATENT SPECIFICATION

(11) **EP 0 636 082 B1**
(45) Date of publication and mention of the grant of the patent: **27.12.1995**
(21) Application number: 93906400.2
(22) Date of filing: 07.04.1993
(51) Int. Cl.: B62D 29/00

(54) **SELF-SUPPORTING FRAME FOR VEHICLES**
SELBSTTRAGENDER RAHMEN FÜR FAHRZEUGE
CHASSIS AUTOS-PORTEUR POUR VEHICULES

(30) Priority: 15.04.1992 BE 9200339
(43) Date of publication of application: 01.02.1995
(73) Proprietor: CALLENS, Ludwig, Willy, Florentina, B-2530 Boechout (BE)
(72) Inventor: CALLENS, Ludwig, Willy, Florentina, B-2530 Boechout (BE)
(74) Representative: Debrabandere, René
(86) International application number: BE9300016
(87) International publication number: WO9321052

(56) References cited:
- US-A- 1 574 180
- US-A- 3 811 722
- US-A- 3 944 242
- US-A- 4 573 707
- DATABASE WPI Section PQ, Week 7504, Derwent Publications Ltd., London, GB; Class Q38, AN 75-A9873W & SU, A, 420 552 (VYUROV)

## Description

The invention concerns a self-supporting frame for vehicles, which frame is partially made of a hardened cast material on the basis of at least one mineral hardening binding agent and at least one filling material and partially of metal parts.

The term vehicle should be understood in the broad sense here, as any frame resting on wheels, caterpillars or sliding surfaces that can be pulled or pushed, whether or not by its own engine mounted upon it.

The invention concerns in particular, but not exclusively, a frame for an industrial vehicle such as a lorry, and even more in particular a frame for a wheeled hoist.

A self-supporting frame of this kind is known from US-A-1.574.180. The metal parts are frames, provided with wire nettings which are embedded in concrete, said frames forming the outer boundaries of the concrete sections and wire netting sections. Construction of the self-supporting frame is rather complicated.

The invention aims to remedy these disadvantages and to provide a self-supporting frame for vehicles which is cheap and can be made very solid.

To this aim the metal parts of he frame comprise metal pipes filled with the hardened cast material.

In this case, the pipes are used as a mould or form. The pipes also serve as a reinforcement and a smaller volume of cast material is required for the same strength, than with exclusively cast material.

Especially, but not exclusively, the frame can also replace the functional supporting structure and thus also the conventional superstructure in hoists and such like.

US-A-3 944 242 discloses a supporting structure for a mobile home, said structure being made exclusively of pre-stressed concrete beams.

Also US-A-3 811 722 discloses a frame structure comprised of stressed concrete, without other metal parts than reinforcement cables or rods cast into the concrete.

SU-A-420 552 concerns a loader frame integrally made of reinforced concrete, while US-A-4 573 707 discloses a rigid chassis structure made from beams of composite plastic material.

Other details and advantages of the invention will become clear from the following description of a self-supporting frame for vehicles according to the invention. This description is given by way of example only without limiting the invention in any way, with reference to the according drawings, where :
figure 1 shows a side view of a self-supporting frame for vehicles according to the invention;
figure 2 shows a section according to line II-II in figure 1.

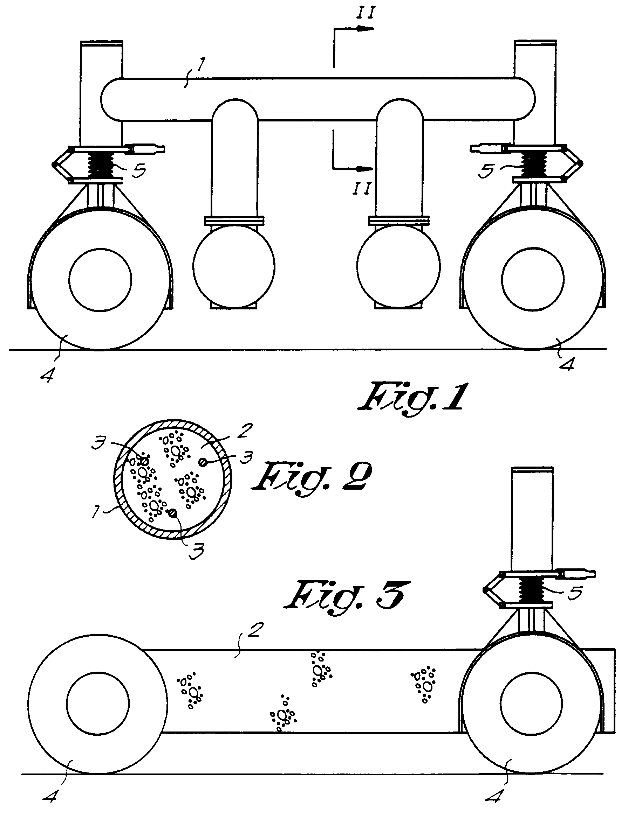

The wheeled self-supporting vehicle frame represented in figures 1 and 2 consists of a structure of hollow steel pipes 1 welded to one another which serve as form and reinforcement for concrete 2 which was cast in these pipes 1 and which hardened in these pipes 1.

This concrete 2 is a normal concrete in conformity with the Belgian standard NBN B 15-501, with cement as a binding agent which hardens by means of water and with sand and gravel as fillers.

Inside the concrete 2, an extra steel reinforcement 3 may possibly be provided.

The pipe construction is composed of pipes 1 having a diameter of 40.6 cm (16 inches) and pipes 1 having a diameter of 81,2 cm (32 inches).

The construction of pipes 1 filled with concrete 2 is, in an analoguos way as a metal frame construction, supported by wheels 4 through the medium of a preferably hydraulic suspension 5. All or a number of the wheels 4 may be rotatable and possibly controllable.

A load can be placed in this frame, or a superstructure, whether or not provided with pipes filled with concrete, such as a coachwork, a cockpit, a crane tower or crane boom, etc.

The volume of relatively expensive steel in the frame is limited. Part of the steel that would be necessary for a frame which is entirely made of steel, is replaced by concrete, which is much cheaper. Since said concrete can be cast, it can be provided relatively easily and fast. The strength of the concrete is excellent. The frame is relatively heavy, which implies that the frame has an excellent stability.

The wheeled frame can be pulled or pushed. It may also be automotive, in which case a combustion engine or an electrical engine is mounted on the frame to drive the wheels 4.

The present invention is in no way limited to the embodiment described above; on the contrary, this embodiments can be made in all sorts of variants while still remaining within the scope of the invention, among others as far as shape, composition, arrangement and the number of parts used are concerned.

In particular, another sort of concrete than the one described above can be used.

The concrete can also be made with another mineral binding agent than cement or lime.

Concrete parts may be provided which are not cast in metal pipes. For example, between the lower horizontal pipes filled with concrete situated between the wheels, a reinforced concrete part which is not cast in pipes, for example a plate, may be provided.

## Claims

1. Self-supporting frame for vehicles, which frame is at least partially made of a hardened cast material (2) on the basis of at least a mineral hardening binding agent and at least a filling material and partially of metal parts, characterized in that the metal parts comprise metal pipes (1) which are filled with the hardened cast material (2).

2. Self-supporting frame according to the above claim, characterized in that the hardened cast material (2) is provided with a reinforcement (3).

3. Self-supporting frame according to any one of the above claims, characterized in that the hardening binding agent is a binding agent which can be hardened by means of water.

4. Self-supporting frame according to the above claim, characterized in that the cast material (2) is concrete or a comparable material.

5. Self-supporting frame according to any of claims 3 and 4, characterized in that the binding agent which hardens by means of water is cement.

6. Self-supporting frame according to any of claims 3 and 4, characterized in that the binding agent which hardens by means of water is lime.

## Patentansprüche

1. Selbsttragender Rahmen für Fahrzeuge, welcher Rahmen zumindest teilweise aus einem gehärteten Gußmaterial (2) auf Basis zumindest eines mineralischen aushärtenden Bindemittels und zumindest eines Füllmaterials und teilweise aus Metallteilen gefertigt ist, dadurch gekennzeichnet, daß die Metallteile Metallrohre (1) umfassen, die mit dem gehärteten Gußmaterial (2) gefüllt sind.

2. Selbsttragender Rahmen gemäß dem vorgenannten Anspruch, dadurch gekennzeichnet, daß das gehärtete Gußmaterial (2) mit einer Verstärkung (3) versehen ist.

3. Selbsttragender Rahmen gemäß einem der vorgenannten Ansprüche, dadurch gekennzeichnet, daß das aushärtende Bindemittel ein mittels Wasser aushärtbares Bindemittel ist.

4. Selbsttragender Rahmen gemäß dem vorgenannten Anspruch, dadurch gekennzeichnet, daß das Gußmaterial (2) Beton oder ein vergleichbares Material ist.

5. Selbsttragender Rahmen gemäß einem der Ansprüche 3 und 4, dadurch gekennzeichnet, daß das mittels Wasser aushärtbare Bindemittel Zement ist.

6. Selbsttragender Rahmen gemäß einem der Ansprüche 3 und 4, dadurch gekennzeichnet, daß das mittels Wasser aushärtbare Bindemittel Kalk ist.

## Revendications

1. Châssis autoporteur pour véhicules, ledit châssis étant partiellement constitué d'un matériau coulé durci (2) à base d'au moins un agent liant de durcissement minéral, d'au moins un matériau de charge et partiellement de pièces métalliques, caractérisé en ce que les pièces métalliques sont constituées de tuyaux métalliques (1) remplis du matériau coulé durci (2).

2. Châssis autoporteur selon la revendication précédente, caractérisé en ce que le matériau coulé durci (2) est pourvu d'un renfort.

3. Châssis autoporteur selon l'une quelconque des revendications précédentes, caractérisé en ce que l'agent liant de durcissement est un agent liant qui peut être durci à l'aide d'eau.

4. Châssis autoporteur selon la revendication précédente, caractérisé en ce que le matériau coulé (2) est du béton ou un matériau comparable.

5. Châssis autoporteur selon l'une quelconque des revendications 3 et 4, caractérisé en ce que l'agent liant qui durcit à l'aide d'eau est du ciment.

6. Châssis autoporteur selon l'une quelconque des revendications 3 et 4, caractérisé en ce que l'agent liant qui durcit à l'aide d'eau est de la chaux.
